Europäisches Patentamt

European Patent Office

Office européen des brevets

(11) Numéro de publication : **0 074 317**
**B1**

(19)

(12) # FASCICULE DE BREVET EUROPÉEN

(45) Date de publication du fascicule du brevet :
19.10.88

(21) Numéro de dépôt : 82401624.0

(22) Date de dépôt : 02.09.82

(51) Int. Cl.⁴ : **E 21 B 47/026**, E 21 B 47/00,
G 01 V  3/20

(54) Procédé et dispositif de diagraphie utilisant une sonde équipée de patins de mesure.

(30) Priorité : 09.09.81 FR 8117065

(43) Date de publication de la demande :
16.03.83 Bulletin 83/11

(45) Mention de la délivrance du brevet :
19.10.88 Bulletin 88/42

(84) Etats contractants désignés :
AT DE FR GB IT NL

(56) Documents cités :
FR-A- 1 057 035
FR-A- 1 306 134
FR-A- 2 394 097
FR-A- 2 395 516
US-A- 2 708 316
US-A- 3 423 671
US-A- 3 474 541
US-A- 3 685 158
US-A- 3 915 229
US-A- 4 171 031

(73) Titulaire : SOCIETE DE PROSPECTION ELECTRIQUE
SCHLUMBERGER
42, rue Saint-Dominique
F-75340 Paris Cédex 07 (FR)
FR IT
Schlumberger Limited
277 Park Avenue
New York, N.Y. 10172 (US)
DE GB NL AT

(72) Inventeur : Panetta, Pascal
6, rue Clémenceau
F-92170 Vanves (FR)
Inventeur : Tromelin, Jacques
98, rue Pierre et Marie Curie
F-91160 Longjumeau (FR)

(74) Mandataire : Hagel, Francis
Etudes et Productions Schlumberger A L'ATTENTION
DU SERVICE BREVETS 26, rue de la Cavée B.P.202
F-92142 Clamart Cedex (FR)

Jouve, 18, rue St-Denis, 75001 Paris, France

## Description

L'invention concerne l'étude des formations traversées par un forage au moyen d'une sonde équpée de patins de mesure.

Pour effectuer certaines mesures dans les forages, notamment pour la pendagemétrie, on applique contre les parois du forage des patins, munis d'électrodes ou de transducteurs, portés par des bras articulés sur un corps de sonde et répartis symétriquement autour de celui-ci. Le corps de sonde est relié à une partie supérieure ou cartouche qui est suspendue à un câble assurant la transmission électrique avec un équipement de surface. Des moyens élastiques agissent sur les bras pour appliquer les patins contre les parois avec une pression appropriée, et un système commandé à partir de l'équipement de surface permet de replier les bras le long du corps de sonde contre l'action des moyens élastiques. Les patins ne sont mis en contact avec les parois que lors du déplacement de mesure.

Le brevet US-A-3 685 158 (J. Planche) décrit un dispositif de pendagemétrie à quatre bras associés en deux paires indépendantes, chaque paire comprenant deux bras opposés dont les déplacements sont liés. Les patins opposés sont donc toujours écartés symétriquement par rapport au corps de sonde, mais les patins d'une paire peuvent être écartés différemment des patins de l'autre paire.

Cet agencement permet aux patins de rester appliqués sur les parois en présence d'un trou ovale, les patins formant alors, vus en plan, les sommets d'un losange au centre duquel se trouve le corps de sonde.

Par ailleurs, dans le dispositif connu précité, les patins sont assujettis à rester coplanaires, de façon à simplifier l'exploitation des signaux de mesure. En d'autres termes, les patins ne peuvent se déplacer latéralement par rapport au corps de sonde que suivant un plan perpendiculaire à l'axe de celui-ci. Ceci est réalisé en montant les patins sur des glissières solidaires des bras, et en les reliant au corps de sonde par des systèmes de biellettes en forme de Y.

Le document FR-A-2 394 097 décrit un dispositif de diagraphie comprenant une cartouche et une sonde, des bras principaux et secondaires articulés sur le corps de sonde, et des patins reliés aux bras principaux et secondaires selon une configuration en parallélogramme.

Dans les forages déviés, le poids de l'un ou l'autre des dispositifs évoqués ci-dessus a une composante radiale qui agit sur le ou les patins inférieurs contre l'action des moyens élastiques, de sorte que le ou les patins supérieurs symétriques du ou des patins inférieurs, ont tendance à décoller de la paroi ce qui entraîne une dégradation des signaux de mesure correspondants. Pour réduire l'effet de l'inclinaison du forage, on peut, comme le prévoit le brevet US-A-3 423 671 (A. Vezin) monter des organes de centrage élastiques au niveau du centre de gravité du dispositif. Mais la compensation obtenue n'est que partielle et ces organes de centrage, constamment en contact avec les parois, subissent une usure rapide. Ils ne peuvent en outre être utilisés que dans les forages d'un diamètre suffisant.

L'invention a donc pour but d'améliorer l'application des patins sur les parois du forage dans le cas d'un forage incliné.

Selon un premier aspect de l'invention, le procédé pour réaliser une diagraphie dans une section de forage inclinée comprend les opérations décrites dans la revendication 1.

Selon un second aspect de l'invention, le dispositif de diagraphie pour l'étude des formations traversées par une section de forage inclinée comprend les éléments énumérés dans la revendication 8.

Le poids de la cartouche n'entre donc pas en ligne de compte dans la composante radiale agissant sur les patins inférieurs. Seul le poids de la sonde intervient, ce qui réduit sensiblement cette composante.

D'autre part, l'extrémité supérieure de la sonde, reliée à la cartouche, repose sur la paroi du forage. De ce fait, l'axe de la sonde est écarté angulairement de l'axe du forage. Un écart similaire existe entre les surfaces de contact des patins, maintenus parallèles à l'axe de la sonde, et les génératrices des parois du forage. La distance résultante entre les éléments de mesure — électrodes ou transducteurs — situés généralement à mi-longueur des patins et les parois en regard est proportionnelle à la longueur des patins. Avec une longueur au plus sensiblemnt égale à 2 D, D étant la dimension transversale de la sonde, et de préférence de l'ordre de 1,5 D, on minimise la distance entre les éléments de mesure et les parois. Une telle longueur correspond par ailleurs à une surface d'application suffisante pour éviter un enfoncement des patins dans les parois dans le cas de formations non consolidées.

Le brevet US-A-3 474 541 (W.E. Cubberly, Jr.) décrit un dispositif de diamétrage adapté aux forages inclinés dans lequel un joint articulé relie la partie supérieure — reliée au câble — à la sonde. Celle-ci porte quatre ressorts en arc agencés en deux paires opposées, dont les extrémités sont reliées à la sonde en étant mobiles suivant la direction longitudinale de celle-ci. Les déplacements des extrémités de chaque paire de ressorts sont mesurés pour déterminer la dimension du trou selon deux directions perpendiculaires. Ce dispositif connu diffère donc fondamentalement de l'invention puisqu'il ne comporte pas de patins maintenus parallèles à l'axe de la sonde.

Le brevet US-A-4 171 031 décrit l'utilisation d'un double joint articulé reliant un outil de diagraphie suspendu à un câble, à un organe de centrage placé au-dessous de l'outil. Un tel arrangement vise à faciliter la descente de l'outil dans le forage en évitant qu'il ne s'immobilise sur une saillie de la paroi. Cet arrangement diffère donc de l'invention aussi bien dans sa structure, que dans sa fonction.

Il est souhaitable d'autre part de pouvoir ajuster la force de rappel appliquée aux patins. Une augmentation de la pression d'application des patins s'impose en particulier, quelle que soit l'inclinaison du forage, en présence d'une boue de forage très visqueuse (« gamboo »). Les brevets US-A-3 423 671 et 3 685 158 précités prévoient un ajustement de la force de rappel mais la plage de réglage est insuffisante, de sorte que pour obtenir une force très importante en cas de besoin, il faudrait utiliser des ressorts très puissants, donnant une force excessive pour les conditions normales.

Selon un troisième aspect de l'invention, le procédé pour appliquer, d'une manière réglable, les patins de mesure d'une sonde de diagraphie contre les parois d'un forage est décrit dans la revendication 5.

Selon un quatrième aspect de l'invention, le dispositif pour appliquer, d'une manière réglable, les patins de mesure d'une sonde de diagraphie contre les parois d'un forage est décrit dans la revendication 12.

Par ce moyen, on peut, de façon indépendante, définir la première force sensiblement constante pour qu'elle corresponde à la valeur appropriée pour les conditions normales, et d'autre part définir la seconde force réglable de façon qu'elle présente une plage de réglage étendue.

L'invention sera bien comprise à la lecture de la description ci-après. Dans les dessins :

— la figure 1 est une vue d'ensemble schématique d'un dispositif de pendagemétrie à bras articulés selon l'invention, en cours de mesure dans un forage incliné ;

— la figure 2 montre plus en détail un patin en contact avec la paroi du forage ;

— la figure 3 est une vue en coupe de l'articulation entre la partie supérieure et la partie inférieure du dispositif ;

— la figure 4 est une vue en coupe axiale montrant plus en détail la portion inférieure de la sonde et en particulier la liaison avec les bras ;

— la figure 5 est une vue en coupe transversale selon le plan IV-IV de la figure 4 à plus grande échelle ;

— la figure 6 est une vue en coupe axiale de la portion de la sonde comprenant les organes de commande des bras ;

— la figure 7 est une vue en perspective de certaines des pièces représentées à la figure 4 ;

— la figure 8 est un schéma du dispositif hydraulique de commande des bras ;

— la figure 9 montre un détail du schéma de la figure 8.

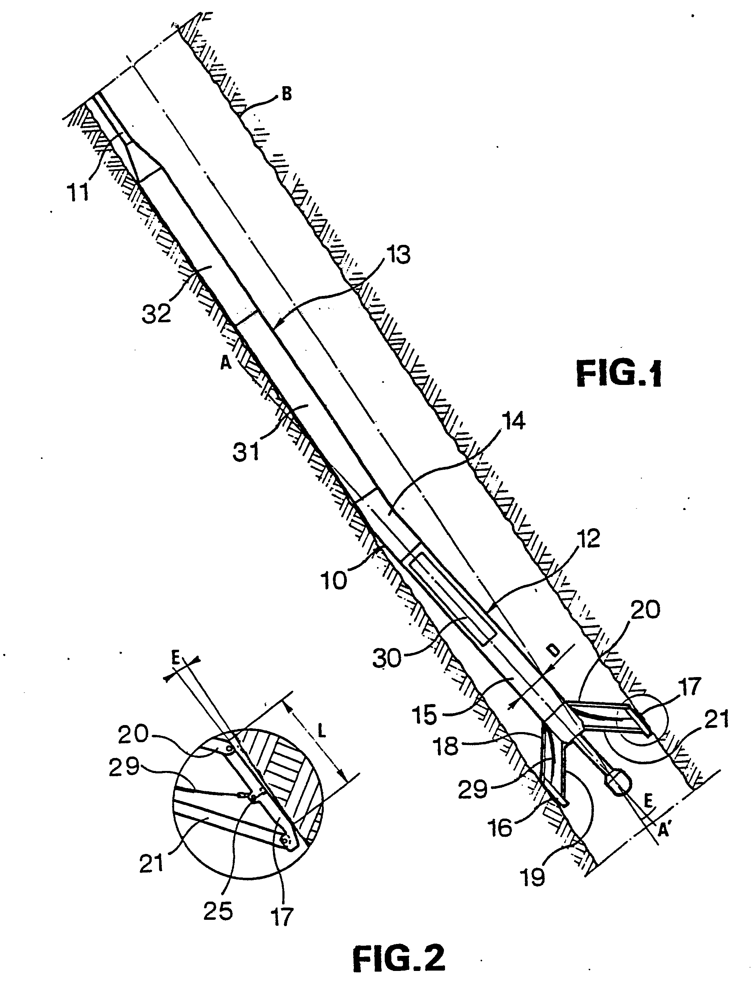

On a représenté à la figure 1 un forage pétrolier B traversant des formations géologiques. Ce forage présente, dans la section où des mesures sont à effectuer, une forte inclinaison par rapport à la verticale.

Un dispositif de pendagemétrie, désigné dans son ensemble par le repère 10, est suspendu à un câble 11 relié à un équipement de surface, non représenté, le câble 11 assurant la transmission électrique entre l'équipement de surface et le dispositif 10.

Le dispositif 10 se présente sous la forme d'un corps allongé de section circulaire, adapté au déplacement dans le forage. Il se compose d'une partie inférieure ou sonde 12 et d'une partie supérieure ou cartouche 13 reliées par une articulation 14.

La sonde comprend un corps 15 dont l'axe AA' définit une direction longitudinale et quatre patins de mesure répartis à 90° autour du corps et portés chacun par deux bras, un bras principal et un bras secondaire articulés sur le corps de sonde 15. Par souci de clarté, la figure 1 ne montre qu'une paire de patins opposés 16, 17 portés respectivement par les bras 18, 19 et 20, 21, les références 18 et 20 désignant les bras principaux et les références 19, 21 les bras secondaires.

Chaque couple de bras portant un patin constitue avec celui-ci un parallélogramme, de sorte que les patins sont toujours parallèles à l'axe du corps de sonde 15.

Des moyens élastiques incluant des ressorts à lames 29 agissent sur les bras pour les écarter latéralement du corps de sonde et appliquer les patins contre les parois du forage. Un mécanisme décrit ci-après, monté dans le corps de sonde et commandé à partir de l'équipement de surface, permet de replier les bras contre le corps de sonde. Les patins ne sont placés en contact avec les parois que lors des déplacements de mesure.

Les bras principaux sont couplés par paires opposées de façon que deux bras opposés, par exemple les bras 18 et 20 soient toujours écartés de manière symétrique par rapport au corps de sonde 15. Mais les deux paires de bras sont indépendantes, c'est-à-dire que les bras d'une paire peuvent s'écarter différemment des bras de l'autre paire. Cet agencement permet aux patins de rester en contact avec les parois dans le cas où la forme du trou est ovale, les patins formant alors, vus en plan, les sommets d'un losange dont le centre est sur l'axe AA' du corps de sonde.

Mais il est à noter que lorsque les deux paires de bras ont des écarts différents par rapport au corps, les paires de patins qui leur sont respectivement liés prennent des positions longitudinales différentes. Cet agencement des patins est dit « non coplanaire ».

Chaque patin porte un système d'électrodes 25 (voir figure 2) qui permet de déterminer la résistivité de la formation située en regard du patin. Un système d'électrodes approprié est décrit par exemple dans la demande de brevet français 2.395.516. Ce système comprend deux électrodes placées côte à côte à mi-longueur du patin.

Des moyens sont prévus dans le dispositif pour l'alimentation des électrodes et pour recevoir et mettre en forme les signaux de mesure. Ces moyens ne sont pas l'objet de l'invention et il n'est pas utile de les décrire ici. Les quatre ensembles de signaux recueillis sont corrélés de façon connue pour déterminer les caractéristiques de pendage des formations.

En outre, des moyens sensibles au déplacement latéral de chaque paire de bras sont montés dans le corps de sonde. A partir des signaux obtenus, on peut calculer la dimension du trou selon deux directions perpendiculaires et ainsi déterminer la forme du trou aux différentes profondeurs. On en déduit également les positions longitudinales des patins de chaque paire par rapport à un point de référence sur le corps. Ces positions, comme on l'a vu, sont variables et il est nécessaire de les connaître pour pouvoir effectuer les corrections de profondeur appropriées.

Par ailleurs, les caractéristiques de pendage (inclinaison et orientation de la ligne de plus grande pente) des formations doivent être déterminées non par rapport à l'axe du forage, mais par rapport à un référentiel terrestre. A cet effet, la sonde porte des moyens sensibles à l'inclinaison de l'axe de la sonde par rapport à la verticale, et des moyens sensibles à l'orientation ou azimuth d'un plan de référence passant par cet axe par rapport à une direction donnée telle que le nord magnétique.

Ces moyens sont rassemblés dans une unité 30 montée dans la partie supérieure de la sonde. Cette unité comprend trois accéléromètres pour la détermination de l'inclinaison et trois magnétomètres pour la détermination de l'orientation. De tels dispositifs sont connus et ne seront pas décrits en détail.

La cartouche 13 comprend deux parties, une cartouche électronique 31 reliée à l'articulation 14 et une cartouche de télémesure 32 reliée au câble 11. La cartouche électronique 31 réalise en liaison avec l'équipement de surface la production des signaux d'excitation et de commande et le traitement des signaux de mesure. La cartouche de télémesure 32 constitue l'interface entre le câble 11 et la cartouche électronique 31.

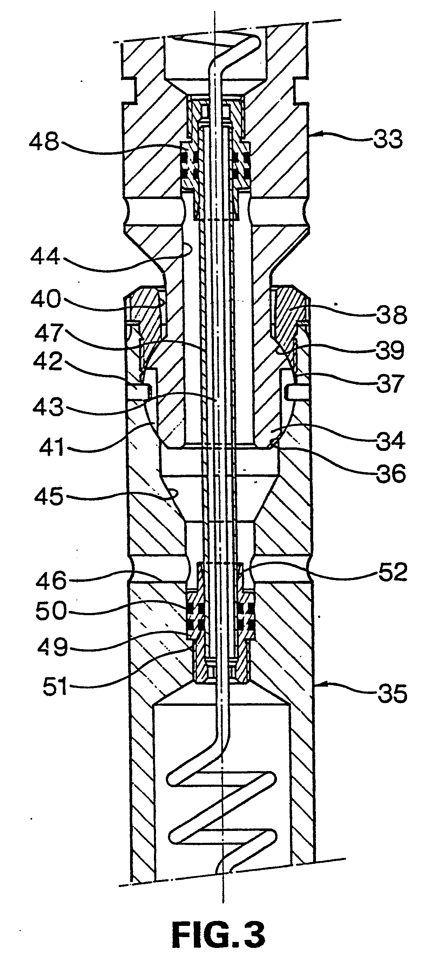

L'articulation 14 est représentée plus en détail à la figure 3. Sa partie supérieure 33, fixée à la cartouche, se termine par une rotule 34 en forme de sphère tronquée.

La partie inférieure 35 de l'articulation, fixée à la sonde, comporte à son extrémité un alésage 36 à portée sphérique qui coopère avec la rotule 34. L'alésage sphérique 36 se prolonge par un alésage fileté 37 dans lequel est vissée une bague 38 servant à retenir la rotule 34. L'alésage de la bague 38 comprend une portion sphérique 39 pour le contact avec la rotule 34 et une portion conique 40 qui autorise un débattement angulaire entre la partie inférieure 35 et la partie supérieure 33.

La bague 38 est formée de deux moitiés pour pouvoir être vissée après l'introduction de la rotule 34 dans l'alésage 36.

La rotule 34 comporte sur sa surface extérieure des encoches 41 dans lesquelles sont engagés des chevilles respectives 42 fixées à la partie supérieure 33. Ces chevilles empêchent la partie inférieure de tourner autour de son axe par rapport à la partie supérieure. Mais les chevilles 42 ne pénètrent pas jusqu'au fond des encoches, de manière que la partie inférieure puisse se déplacer angulairement dans une direction quelconque.

Le passage nécessaire pour les conducteurs électriques placés dans une gaine 43 est fourni par un trou central 44 formé dans la partie supérieure 33 et un trou central 45 prolongeant l'alésage 36 dans la partie inférieure 35. Des conduits 46 permettent à la boue de forage de pénétrer dans ces trous 44, 45 en réalisant un équilibrage de la pression sur les différentes pièces.

La gaine 43 est protégée de la boue par un tube métallique flexible 47 résistant à la pression. Le tube 47 a ses extrémités engagées dans des pièces d'étanchéité 48, 49 fermant respectivement le trou central 44 de la partie supérieure et le trou central 45 de la partie inférieure. Pour interdire efficacement le passage de la boue, des joints d'étanchéité tels que 50, 51 sont montés respectivement sur la surface extérieure et la surface intérieure de chaque pièce d'étanchéité. On notera que dans chaque pièce d'étanchéité, l'alésage recevant le tube 47 comporte un évasement terminal 52 autorisant un écart angulaire du tube flexible 47 par rapport à la pièce d'étanchéité considérée.

L'utilisation d'une liaison articulée entre la sonde et la cartouche, dans un forage incliné, permet à la cartouche de reposer sur la paroi du forage, comme le montre la figure 1. Le poids de la cartouche n'entre donc pas en ligne de compte dans la composante de poids radiale qui s'applique sur le ou les patins inférieurs. Cette composante résulte uniquement du poids de la sonde 12.

La sonde est centrée par rapport au forage au niveau des patins cependant que son extrémité supérieure fixée à l'articulation 14 est au voisinage de la paroi. L'écart angulaire E qui en résulte entre l'axe de la cartouche (parallèle à l'axe du forage) et l'axe du corps de sonde est alors déterminé par le diamètre du forage et la longueur de la sonde.

Cet écart angulaire se traduit pour les patins par un écart e entre les électrodes 25 placées à mi-longueur des patins et la paroi du forage, lequel écart est proportionnel à la longueur L de la partie des patins destinée au contact avec la paroi.

Dans le présent exemple de réalisation, cette longueur L est choisie égale à environ 1,5 D, D étant le diamètre extérieur du corps de sonde. Ceci correspond, avec les diamètres usuels, à une longueur d'environ 15 cm. Avec une largeur appropriée, une telle longueur fournit une surface d'appui suffisante pour éviter un enfoncement des patins dans les parois. En même temps, cette longueur est suffisamment réduite pour que l'écart e reste faible et n'affecte pas la qualité des mesures.

Toutefois, pour le cas où se produirait un décollement du ou des patins supérieurs, provoquant un affaiblissement important, voire la disparition des signaux de mesure correspondants, on a prévu de pouvoir augmenter la pression d'appui des patins.

On a vu qu'à chaque patin est associé un ressort à lames 29. Ce type de ressorts fournit une force de rappel qui varie peu avec l'écartement des bras.

Une force de rappel auxiliaire est fournie par deux ressorts à boudin montés dans le corps de sonde, dont chacun agit sur une paire de bras opposés. Ce système de ressorts sera décrit en détail ci-après. La compression de ces ressorts est réglable à partir de l'équipement de surface, ce qui permet d'augmenter ou de réduire en cours de mesure la pression d'appui des patins.

Par ce moyen, on peut obtenir une augmentation très importante de la force appliquée aux patins, car la force fournie par les ressorts à boudin, qu'on peut choisir très puissants, a une plage de réglage étendue. En même temps, on peut limiter la force de rappel, pour les conditions normales, à la valeur simplement suffisante pour obtenir une application correcte des patins. Si l'on appliquait en permanence une force ne convenant que pour les conditions extrêmes, la résistance au déplacement des bras dans le sens de la fermeture deviendrait très élevée. En cas de rétrécissement brusque du forage, par exemple dans une section succédant à une cave, on pourrait observer un « collage » des patins aux parois ou du moins un très net ralentissement du déplacement par rapport à la vitesse affichée, un tel phénomène, appelé « yoyo », étant très gênant. En outre, le mécanisme de fermeture des bras devrait avoir une puissance accrue.

On va maintenant décrire en détail les organes de commande du déplacement des bras et de la pression d'appui des patins.

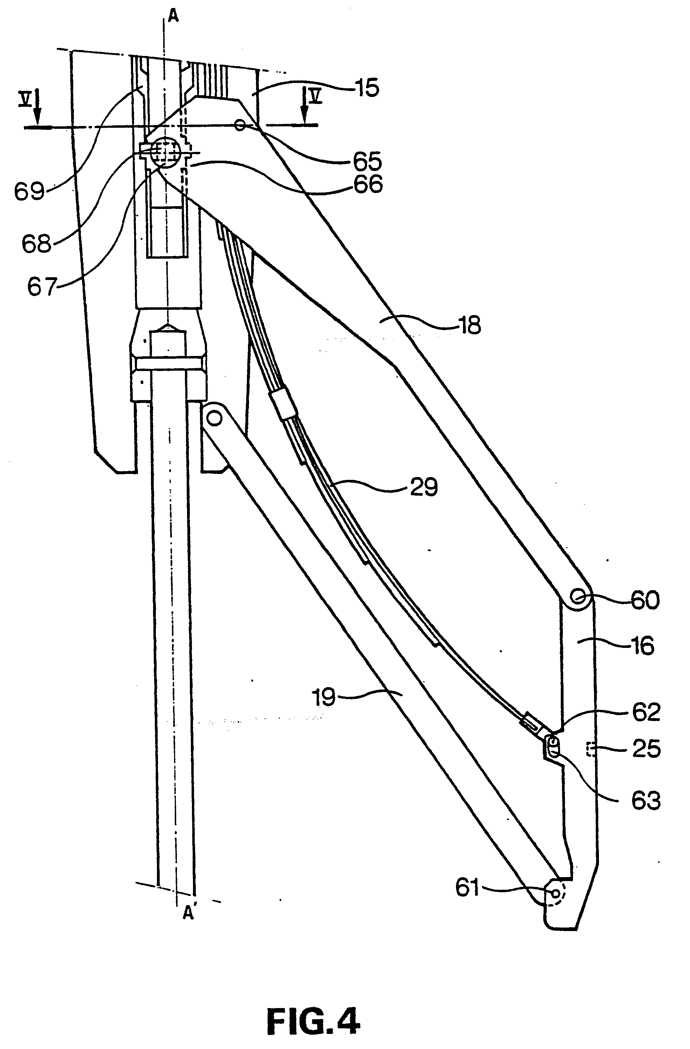

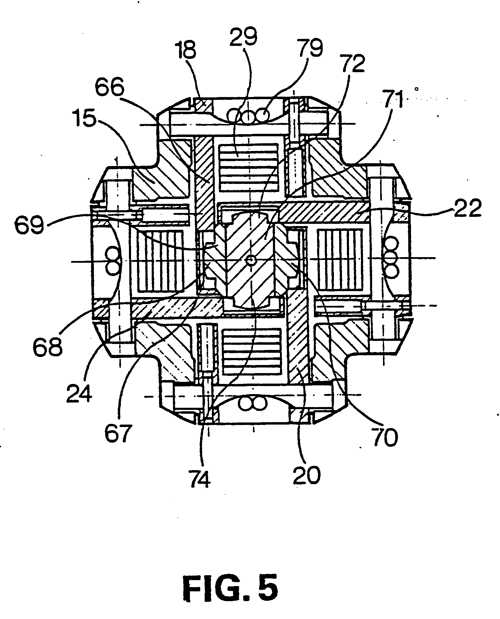

Les figures 4 et 5 illustrent la liaison des bras au corps de sonde d'axe A-A'. Sur la figure 4, un seul ensemble patin-bras est représenté pour plus de clarté.

Le patin 16 est relié au bras principal 18 et au bras secondaire 19 par des pivots respectifs 60, 61. Il est soumis directement à l'action de rappel du ressort à lames 29, dont l'extrémité 62 est engagée dans une lumière 63 prévue sur le côté intérieur du patin. L'autre extrémité des ressorts à lames est fixée au corps de sonde.

Le bras principal 18 est relié au corps 15 par un pivot 65. Comme le montre la figure 5, les bras principaux ont une section en U, et l'une des branches du U s'élargit en direction du corps sous la forme d'une extension 66. Cette extension 66 comporte un trou circulaire dans lequel est logé un disque 67 muni d'une fente centrale orientée perpendiculairement à l'axe A.A'. Le disque 67 est engagé par cette fente sur un téton carré 68 formé sur une tige d'actionnement 69 mobile suivant l'axe A.A'. Un déplacement de la tige 69 entraîne donc un pivotement du bras principal 18 autour du pivot 65. Le déplacement en arc de cercle du disque 67, consécutif au déplacement du téton 68, implique un petit déplacement latéral du disque. Ce déplacement est rendu possible par le fait que le disque 67 peut coulisser perpendiculairement à l'axe A.A' par rapport au téton 68, dont la dimension latérale est plus petite que celle de la fente du disque.

Comme le montre la figure 5, la tige 69 porte un second téton 70 diamétralement opposé au téton 68 et qui est relié au bras principal 20 opposé au bras 18, le mode de liaison étant identique. Les bras 18 et 20 sont disposés de façon que leurs extensions respectives 66 se trouvent sur des côtés opposés de la tige 69.

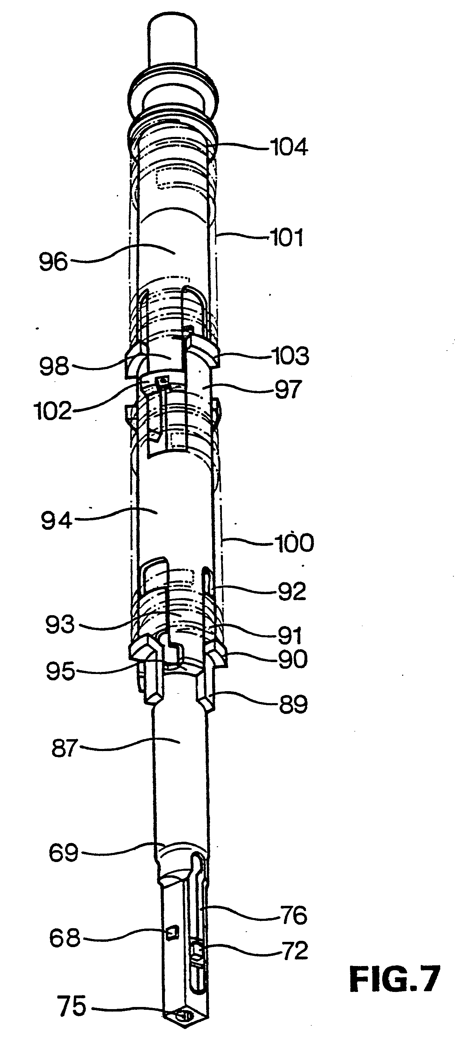

L'autre paire de bras principaux 22, 24 est actionnée par une seconde tige 71 montée à l'intérieur de la tige 69 et munie de deux tétons carrés opposés 72, 74. Comme le montre bien la vue en perspective de la figure 7, la tige 69, dans sa partie terminale, a une section sensiblement carrée et comporte un alésage central 75 dans lequel est montée coulissante la tige 71. La tige 69 comporte de plus une lumière longitudinale 76 que traversent les tétons 72, 74 de la tige 71 et qui autorise des mouvements relatifs entre les deux tiges 69 et 71.

On voit sur la figure 5 que les bras 22, 24 sont identiques aux bras 18, 20 et que leur liaison à la tige 71 est réalisée exactement comme celle des bras 18, 20 à la tige 69.

L'agencement décrit permet bien d'obtenir le couplage de chaque paire de bras opposés et l'indépendance des deux paires de bras dont on a parlé précédemment.

On notera que des capteurs, non représentés, sont prévus pour détecter le déplacement de chacune des tiges 69 et 71. Les signaux produits par ces capteurs sont indicatifs de l'écartement de chacune des paires de bras et permettent ainsi de déterminer la dimension du forage selon deux directions perpendiculaires. Ces informations interviennent, comme on l'a dit, dans la détermination du pendage.

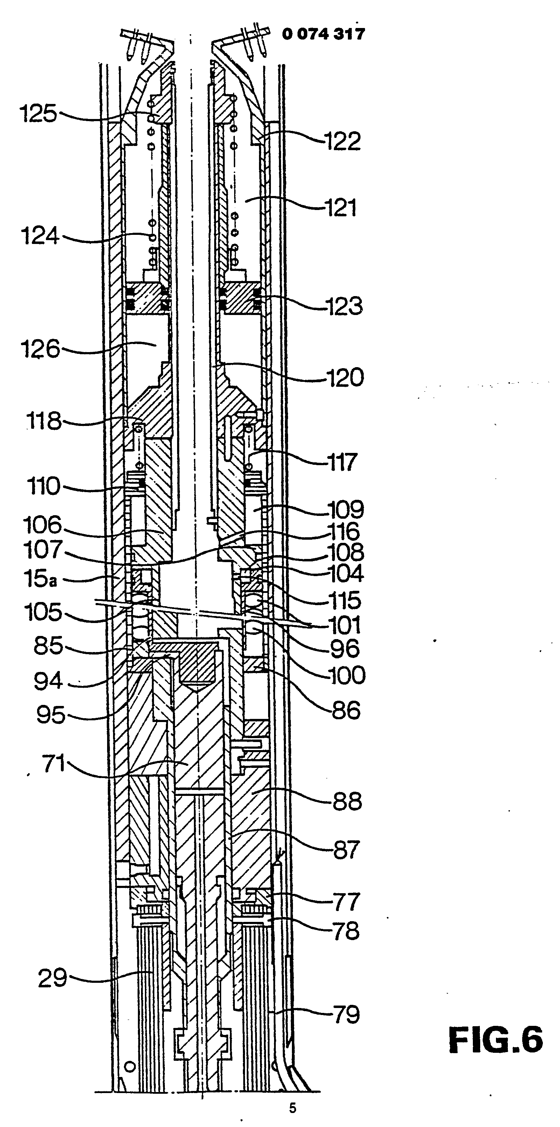

Les ressorts à lames 29 sont fixés sur une partie 77 du corps de sonde par des vis 78, comme le montre la figure 6.

La référence 79 sur les figures 5 et 6 désigne les conducteurs reliant les électrodes portées par les patins à la cartouche électronique 21.

Les tiges d'actionnement 69 et 71 peuvent être déplacées vers le haut (sur les figures 4 et 6) pour la fermeture des bras. Il est prévu pour cela un piston de fermeture tubulaire 85 mobile à l'intérieur d'une enveloppe 15a faisant partie du corps de sonde, lequel piston porte une bague de poussée 86 vissée à son extrémité. La tige 69 comporte une partie centrale 87 guidée dans une partie 88 du corps de sonde et à l'extrémité opposée aux bras, trois secteurs de plus grand diamètre régulièrement répartis autour de la périphérie de la tige 69. Chaque secteur se compose d'une partie 89 reliée à la partie centrale 87, dont le diamètre extérieur est inférieur au diamètre intérieur de la bague de poussée 86, d'une partie en saillie 90 destinée au contact radial avec la bague de poussée 86 pour permettre au piston 85 de déplacer la tige 69, et d'une partie terminale 91 de diamètre extérieur supérieur au diamètre intérieur de la bague de poussée 86.

Les parties terminales 91 sont respectivement engagées dans les intervalles 92 ménagés entre des doigts 93 constituant l'extrémité d'un manchon 94 de même diamètre extérieur que les parties terminales 91. Les doigts 93 sont fixés à des parties en saillie respectives 95 formées à l'extrémité de la tige d'actionnement intérieure 71. Ces parties en saillie 95 ont un diamètre extérieur égal à celui du manchon 94, donc supérieur au diamètre intérieur de la bague de poussée 86. Ceci permet au piston de fermeture 85 de déplacer également la tige 71.

On notera que la dimension longitudinale de la lumière 76 formée dans la tige 69 et celle des intervalles 92 sont calculées pour autoriser le mouvement relatif entre les deux tiges 69 et 71, de façon à réaliser l'indépendance des deux paires de bras opposés. Mais ainsi qu'il est nécessaire, le déplacement du piston de fermeture 85 vers le haut provoque le déplacement des deux tiges 69, 71 et la fermeture des deux paires de bras.

L'extrémité du manchon 94, du côté opposé aux bras s'interpénètre avec l'extrémité d'un piston tubulaire 96. L'extrémité du manchon 94 est constitué, comme le montre la figure 7, par trois doigts 97 répartis à 120° et de même, l'extrémité du piston 96 est formée par trois doigts 98, les doigts 97 (resp. 98) étant engagés dans les intervalles séparant les doigts 98 (resp. 97).

De plus, un ressort à boudin 100 est monté autour du manchon 94, et un second ressort à boudin 101 est placé autour du piston 96.

Le ressort 100 prend appui, d'une part, sur des saillies radiales 102 formées respectivement à l'extrémité des doigts 98 du piston 96, et d'autre part, sur les parties en saillie 90 de la tige d'actionnement extérieure 69.

Le ressort 101 est monté entre des saillies radiales 103 formées respectivement à l'extrémité des doigts 97 du manchon 94 et une collerette de butée 104 qui constitue l'extrémité du piston 96, du côté opposé aux doigts 98.

Les ressorts 101, 102 sont entourés par le piston de fermeture 85, cependant que le piston 96 et le manchon 94 entourent une partie tubulaire 105 faisant partie du corps de sonde. A l'intérieur de cette partie tubulaire sont montés une unité de commande hydraulique, non représentée sur la figure 6 mais décrite en détail ci-après, et son moteur d'entraînement. La partie tubulaire 105 se prolonge par une partie 106 de plus grand diamètre, les parties 105 et 106 étant reliées par une collerette radiale 107. Cette collerette 107 définit une première chambre annulaire 108 avec la collerette 104 du piston 96, et une seconde chambre annulaire 109 avec une collerette 110 formée à l'extrémité du piston de fermeture 96 et s'étendant radialement vers l'intérieur. L'étanchéité des chambres 108 et 109 est assurée par des joints montés respectivement sur les collerettes 104, 107 et 110. Les chambres 108 et 109 communiquent avec l'unité hydraulique par des conduits respectifs 115, 116.

Avec l'agencement décrit, le ressort 100 exerce une force de rappel sur la tige d'actionnement extérieure 69 puisqu'il prend appui sur les parties en saillie 90 de la tige 69. Le ressort 101 agit sur la tige d'actionnement intérieure 71 puisqu'il s'appuie sur les saillies 103 solidaires de cette tige 71.

Le piston 96 sert au réglage de la force de rappel exercée par chacun des ressorts à boudin 100, 101. Dans la position de la figure 6, le piston 96 est en butée contre la collerette fixé 107, et les ressorts sont comprimés au minimum.

Lorsque le piston 96 se déplace vers le bas sous l'action de la pression créée dans la chambre 108 par l'unité hydraulique, comme expliqué ci-après, la compression du ressort 101 en appui sur la collerette 104 du piston 96 augmente, et comme l'autre ressort 100 est en appui sur les saillies radiales 102 constituant l'extrémité du piston 96, il est comprimé de la même quantité que le ressort 101.

Ainsi l'augmentation de la pression d'appui consécutive au déplacement du piston 96 est la même pour tous les patins.

Un capteur de déplacement, non représenté, est logé dans la partie tubulaire 105 pour détecter la position du manchon 94. Le signal produit par ce capteur est donc indicatif du degré de compression des ressorts 100, 101.

Le piston de fermeture 85 est soumis à l'action d'un ressort à boudin 117 qui le rappelle en position d'ouverture des bras (vers le bas sur la figure 6). Ce ressort 117 prend appui sur un prolongement annulaire 118 de la partie fixe 106.

Un tube 120 est fixé à l'intérieur de la partie fixe 106 et du prolongement 118. L'intérieur de ce tube est rempli d'huile et communique avec une chambre 121 délimitée par un boîtier 122 monté à l'extérieur de l'enveloppe 15a et par un piston 123. Ce piston est sollicité en traction par un ressort 124 vissé par une extrémité à une pièce solidaire du piston 123 et par l'autre extrémité sur une pièce de butée 125 fixée sur l'extrémité du tube 120. Le prolongement 118 et le piston 123 définissent entre eux une chambre 126 qui communique avec l'extérieur. Pendant une opération de mesure dans un forage, la boue de forage pénètre dans la chambre 126 et la pression de la boue est communiquée par le piston 124 à l'huile présente dans la chambre 121 et à l'intérieur du tube 120, ce qui réalise un équilibrage de pression approprié. Cette huile baigne l'unité hydraulique et constitue le réservoir nécessaire à son fonctionnement.

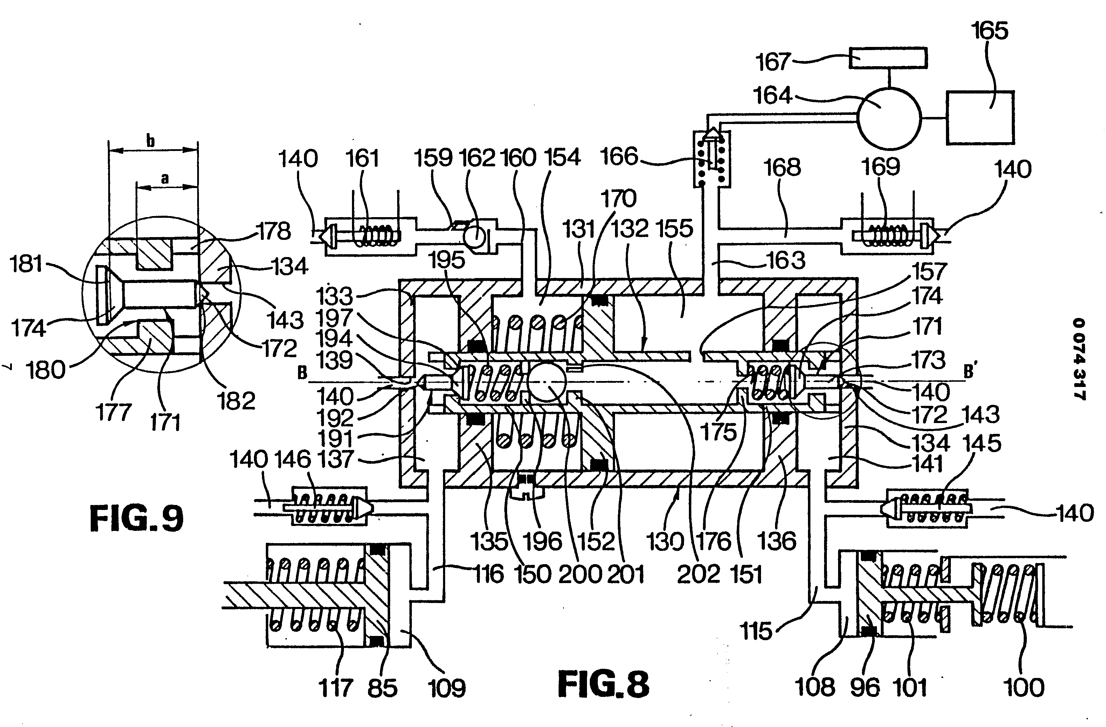

L'unité hydraulique est représentée sous la forme d'un schéma à la figure 8. Pour mieux faire comprendre sa relation avec les éléments précédemment décrits, on a représenté sur la figure 8, de façon schématique, le piston 85 commandant la fermeture des bras, qui est soumis à la pression régnant dans la chambre 109, appelée ci-après chambre de fermeture, et à l'action de rappel du ressort 117.

On a également représenté schématiquement le piston 96 servant au réglage de la compression des ressorts 100 et 101, ce piston étant soumis à la pression dans la chambre 108, appelée ci-après chambre de compression.

L'unité hydraulique comprend un distributeur, désigné dans son ensemble par le repère 130, qui est formé d'un cylindre fixe 131 et d'un piston mobile 132 d'axe B.B'. Le cylindre 131 comporte, associée à chacune de ses parois terminales 133, 134, une cloison transversale 135, 136 munie d'un trou central pour le passage du piston 132, des joints étant prévus pour réaliser l'étanchéité. La chambre 137 définie entre la paroi 133 et la cloison 135 communique en permanence avec la chambre de fermeture 109 par le conduit 116 et peut communiquer avec le réservoir par une ouverture circulaire 139 centrée sur l'axe B.B' du piston 132. Sur la figure 8, le réservoir est désigné par le repère 140.

De façon symétrique, à l'autre extrémité du cylindre 131, la paroi terminale 134 et la cloison 136 définissent une chambre 141 qui communique en permanence avec la chambre de compression 108 par le conduit 115 et qui peut communiquer avec le réservoir par une ouverture circulaire 143 centrée sur l'axe du piston 132.

Des soupapes de détente 145, 146 sont montées en dérivation respectivement entre les conduits 115 et 116 et le réservoir.

Le piston 132 a une structure généralement tubulaire composée d'une portion 150 traversant la cloison 135 et d'une portion 151 traversant la cloison 136. Au raccordement de ces deux portions se trouve une cloison transversale 152 qui sépare de façon étanche l'espace compris entre les cloisons 135 et 136 du cylindre en deux chambres, à savoir la chambre 154 entre la cloison fixe 135 et la cloison mobile 152, et la chambre 155 entre la cloison mobile 152 et la cloison fixe 136. La chambre 155 communique avec l'intérieur de la portion 150 du piston par une ouverture 157. La chambre 154 peut être reliée par un conduit 160 au réservoir par l'intermédiaire d'une soupape électromagnétique normalement fermée 161 et d'un clapet à bille 162. Un orifice étroit 159 est ménagé dans le siège de ce clapet, dans un but qui sera expliqué ci-après.

La chambre 155 est reliée par un conduit 163 à une pompe 164 entraînée par un moteur 165, un clapet anti-retour 166 étant monté dans ce conduit. La pompe 164 prélève l'huile dans le réservoir par l'intermédiaire d'un filtre 167.

La chambre 155 peut d'autre part être mise en communication avec le réservoir par un conduit 168 dans lequel est prévue une soupape électromagnétique normalement fermée 169.

Le piston 132 est rappelé vers la droite (sur la figure 8) par un ressort à boudin 170 monté entre la cloison fixe 135 et la cloison 152 du piston.

Un clapet 171 est monté à l'intérieur de la portion 151 du piston 132 (située à droite sur la figure 8). Ce clapet comprend un cône 172 formé à l'extrémité d'un fût 173, et, à l'autre extrémité, un évasement tronconique 174 se raccordant au fût. Le diamètre du fût 173 est un peu supérieur à celui de l'ouverture 143, de sorte que le cône 172 est capable d'obturer l'ouverture 143, comme représenté sur la figure 8. Un ressort à boudin 175 prenant appui sur un épaulement intérieur 176 rappelle le clapet 171 en position d'obturation (vers la droite sur la figure 8).

L'évasement tronconique 174 est conçu pour coopérer avec un siège constitué par l'arête d'un autre épaulement intérieur 177 voisin de l'extrémité du piston, ce qui permet de fermer la communication entre la chambre 141 et l'intérieur du piston 132 relié à la chambre 155. Il faut noter à ce propos que lorsque le piston 132 est en butée contre la paroi 134, comme le montre la figure 8, et que le cône 172 obture l'ouverture 143, l'évasement tronconique 174 n'est pas en contact avec son siège. En d'autres termes, comme le montre mieux la vue de détail de la figure 9, la distance axiale a entre l'arête 180 de l'épaulement 177 destinée au contact avec l'évasement tronconique 174 et la face d'extrémité du piston 132 qui vient en butée sur la paroi 134 est inférieure à la distance axiale b entre la zone circulaire 181 de l'évasement tronconique 174 qui vient en contact avec l'arête 180 et la zone circulaire 182 du cône 172 qui vient en contact avec l'ouverture 143.

L'extrémité du piston 132, en contact avec la paroi terminale 134 dans la position de la figure 8, comporte des fentes 178 qui permettent la communication entre l'intérieur de la portion 151 du piston et la chambre 141 lorsque le piston 132 est en contact avec la paroi 134.

Un agencement symétrique est prévu à l'autre extrémité du piston 132, avec un clapet 191 de même forme que le clapet 171, muni d'un cône 192 pour l'obturation de l'ouverture 139 et d'un évasement tronconique 194 destiné à coopérer avec un épaulement intérieur 197 pour fermer la communication entre la chambre 137 et l'intérieur de la portion tubulaire 150 du piston. Le clapet 191 est rappelé en position d'obturation par un ressort à boudin 195 prenant appui sur un épaulement intérieur 196.

Dans la position représentée, le clapet 191 a la position inverse de celle du clapet 171, c'est-à-dire qu'il est en contact avec l'épaulement 197 et qu'il n'obture pas l'ouverture 139.

En outre, une bille 200 est enfermée entre des saillies intérieures 196 autorisant le passage de l'huile et un épaulement intérieur 201 de la portion 150, servant de siège à la bille 200. Un petit orifice 202 est prévu dans le siège 201 pour conserver la communication entre l'intérieur de la portion 150 et l'intérieur de la portion 151 lorsque la bille 200 est plaquée contre son siège.

On va maintenant décrire le fonctionnement de l'unité hydraulique au cours d'une opération de pendagemétrie.

La position représentée sur la figure 8 est la position de repos, les bras étant écartés sous l'action de leurs ressorts. Le piston 132, sous l'action du ressort 170, est en butée contre la paroi 134. Le moteur 165 est à l'arrêt.

Les soupapes électromagnétiques 161 et 169, dont les électro-aimants ne sont pas excités, sont fermées. La chambre de fermeture 109 communique avec le réservoir, tandis que le clapet 171 autorise la communication entre la chambre de compression 108 et la chambre 155. La chambre 154 est fermée par la soupape 161.

La première opération consiste à mettre toutes les chambres en équilibre de pression avec le réservoir. Pour cela, on commande l'ouverture des soupapes 161 et 169. La chambre de compression 108 est ainsi mise en communication avec le réservoir via la chambre 155 et la soupape 169, de même que la chambre 154 via la soupape 161. La chambre de fermeture est déjà en communication avec le réservoir.

Une fois atteint cet équilibre, on cesse d'exciter les électro-aimants des soupapes 161 et 169.

Il s'agit ensuite de déplacer le piston 85 pour la fermeture des bras, en vue de la descente dans le forage.

Pour cela, on fait démarrer le moteur 165 pour entraîner la pompe 164, et on ouvre la soupape 161 pour mettre la chambre 154 en communication avec le réservoir, afin que l'huile présente dans cette chambre ne s'oppose pas au déplacement du piston 132.

L'augmentation de la pression dans la chambre 155, due au fonctionnement de la pompe, provoque un déplacement du piston 132 contre l'action du ressort 170 jusqu'à la venue en butée avec la paroi terminale 133.

Par suite de ce déplacement, le cône 192 du clapet 191 vient obturer l'ouverture 139, fermant la communication de la chambre de fermeture 109 avec le réservoir, tandis que l'évasement tronconique 194 est écarté de son siège, mettant la chambre de fermeture en communication avec la chambre 155 via l'intérieur de la portion 150 du piston.

Le processus inverse se produit à l'autre extrémité du piston 132. L'évasement tronconique 174 est mis en contact avec son siège cependant que le cône 172 cesse d'obturer l'ouverture 143. La chambre de compression 108 cesse donc de communiquer avec la chambre 155, mais est mise en communication avec le réservoir.

Au total, l'augmentation de la pression dans la chambre de fermeture déplace le piston 85 contre l'action du ressort 117, et les bras se replient le long du corps de sonde. La chambre de compression étant à la pression du réservoir, le piston 96 reste au repos.

Une fois effectuée la fermeture des bras, on arrête le moteur 165. Le retour en position fermée de la soupape 161 peut avoir lieu avant l'arrêt du moteur.

Après l'arrêt du moteur, les soupapes 161 et 169 étant fermées, aucun déplacement du piston 132 n'a lieu, et celui-ci reste en butée contre la paroi 133. Les bras restent donc fermés.

La descente du dispositif dans le forage peut alors s'effectuer. Lorsque le dispositif a atteint la profondeur à laquelle le déplacement de mesure doit commencer, il faut commander l'ouverture des bras afin que les patins entrent en contact avec la paroi du forage.

Pour cela, on ouvre les deux soupapes 161 et 169. Le piston 132 commence à se déplacer sous l'action du ressort 170 du fait que la pression diminue dans la chambre 155.

Comme il existe une course morte b — a du fait de l'agencement décrit précédemment, le clapet 191 reste dans la même position au début du déplacement du piston. La chambre de fermeture ne communique pas encore avec le réservoir. Elle ne communique plus avec la chambre 155 que par le petit orifice 202, car l'huile sous pression qu'elle contenait vient appliquer la bille 200 contre son siège 201. Ceci évite que l'huile sous pression traverse la soupape 169, au risque de la détériorer.

La poursuite du déplacement du piston 132 replace le clapet 191 dans la position de la figure 8, établissant la communication de la chambre de fermeture avec le réservoir et fermant sa communication avec la chambre 155.

On ferme alors les soupapes 161 et 169.

En cours de mesure, si l'on veut augmenter la pression d'appui des patins sur les parois, il faut déplacer le piston 96.

Pour cela, on met en marche le moteur 165, les soupapes 161, 169 restant fermées. La pression augmente dans la chambre 155 et donc dans la chambre de compression 108 qui communique avec elle.

La soupape de détente 145 définit la valeur maximale Pmax que peut atteindre la pression dans la chambre de compression.

Pour régler la pression à une valeur inférieure à Pmax, il suffit d'arrêter le moteur lorsque cette valeur est atteinte. La pression garde cette valeur après l'arrêt du moteur.

Si ensuite on juge que la pression d'appui des patins peut revenir à une valeur plus basse, on réduit la pression dans la chambre de compression. Pour cela, on ouvre la soupape 169 pour mettre la chambre de compression en communication avec le réservoir via la chambre 155. On ferme la soupape 169 lorsque la valeur désirée est atteinte.

Pour ramener la pression dans la chambre de compression à sa valeur minimale, à savoir la pression du réservoir, deux solutions sont possibles.

On peut ouvrir la soupape 169, auquel cas la chute de pression est lente, l'orifice offert par cette soupape étant petit.

L'autre solution, permettant une chute rapide de la pression, consiste à ouvrir les deux soupapes 161 et 169. La chambre 154 est mise en communication avec le réservoir et compte tenu de la différence de pression entre la chambre 154 et la chambre 155, le piston 132 se déplace contre l'action de son ressort, entraînant le clapet 171. La chambre de compression 108 est ainsi mise en communication avec le réservoir par l'ouverture 143, ce qui permet à la pression dans cette chambre de tomber rapidement.

A la fin du déplacement de mesure, on commande la fermeture des bras par le même processus que celui décrit plus haut.

Une procédure d'urgence existe en outre pour obtenir une fermeture rapide des bras alors qu'une pression élevée règne dans la chambre de compression 108.

Pour cela, on ouvre la soupape 161. L'huile qui s'écoule de la chambre 154 applique la bille 162 contre son siège et ne peut s'écouler que par l'orifice étroit 159 ménagé dans ce siège. Le piston 132 se déplace alors vers la gauche du fait que la pression est élevée dans la chambre 155, mais sa vitesse est limitée par la vitesse à laquelle l'huile peut s'échapper par l'orifice 159.

On met en marche le moteur 165. Le déplacement du piston 132 a fermé la communication entre la chambre de fermeture 109 et le réservoir et mis en communication, d'une part, la chambre de fermeture avec la chambre 155 et d'autre part, la chambre de compression 108 avec le réservoir.

La pression augmente donc dans la chambre de fermeture et le piston 85 se déplace pour fermer les bras.

Le dispositif décrit est adapté aux mesures dans les forages inclinés. Dans les forages verticaux (ou du moins très peu inclinés), la liaison par articulation entre la sonde et la cartouche ne s'impose plus puisque la composante radiale du poids est négligeable.

Dans ce cas, la sonde peut être fixée rigidement à la cartouche et des centreurs peuvent être montés sur la sonde ou la cartouche.

L'agencement décrit permettant d'accroître la pression des patins est avantageux également dans un forage vertical, notamment en présence d'une boue de forage de forte viscosité.

## Revendications

1. Procédé pour réaliser une diagraphie dans une section de forage inclinée comprenant les opérations suivantes :
— descendre dans le forage jusqu'à une profondeur donnée, au moyen d'un câble (11), un dispositif comprenant une sonde de mesure allongée (12) et une cartouche allongée (13) reliant la sonde au câble, la sonde étant équipée de quatre patins (16, 17) portant des moyens de mesure et répartis régulièrement autour d'elle, les patins étant placés aux extrémités de bras respectifs (18, 19, 20, 21) articulés sur la sonde ;
— appliquer élastiquement les patins contre la paroi du forage en les maintenant parallèles à l'axe de la sonde, celle-ci étant centrée par rapport au forage à la hauteur des patins ;
caractérisé par
— déplacer les patins (16, 17) le long du forage par traction sur le câble (11) en autorisant un écart angulaire (E) entre l'axe de la cartouche (13) et celui de la sonde (12), grâce à quoi la cartouche (13) peut reposer sur la paroi du forage, la dimension (L) des patins (16, 17) parallèles à cet axe étant au plus sensiblement égale au double de la dimension transversale (D) de la sonde (12).

2. Procédé selon la revendication 1, caractérisé par le fait que l'on produit au cours dudit déplacement des signaux indicatifs de l'inclinaison de l'axe de la sonde par rapport à la verticale et de son orientation par rapport à un azimuth de référence.

3. Procédé selon l'une des revendications 1 et 2, caractérisé par le fait que la force de rappel appliquant les patins contre la paroi du forage est réglable au cours de leur déplacement.

4. Procédé selon la revendication 3, caractérisé par le fait que ladite force de rappel résulte de l'addition d'une première force sensiblement constante quelle que soit la position des patins et d'une seconde force réglable.

5. Procédé pour appliquer, d'une manière réglable, les patins de mesure (16, 17) d'une sonde de diagraphie (12) contre les parois d'un forage, lesdits patins (16, 17) étant disposés à l'extrémité de bras articulés (18-20), caractérisé par les opérations suivantes :
— appliquer auxdits patins (16, 17) une première force de rappel sensiblement constante quel que soit l'écartement des bras (18-20) par rapport à l'axe de la sonde (12) ; et
— appliquer auxdits patins (16, 17) une seconde force de rappel réglable et indépendante de ladite première force.

6. Procédé selon la revendication 5, caractérisé par le fait que la force sensiblement constante est individuellement et directement appliquée à chacun des patins et la force réglable est commune à tous les patins et leur est appliquée par l'intermédiaire des bras.

7. Procédé selon l'une des revendications 5 et 6, caractérisé par le fait que l'on produit un signal indicatif de la force réglable.

8. Dispositif de diagraphie pour l'étude des formations traversées par une section de forage inclinée comprenant :
— une cartouche électronique allongée (13) agencée pour être reliée à un câble (11),
— une sonde de mesure allongée (12) reliée à la cartouche et comprenant :
— un corps (15),
— quatre bras principaux (18, 20) articulés sur le corps et répartis régulièrement autour dudit corps, les bras opposés étant assujettis à rester symétriques par rapport à l'axe de la sonde (12),
— quatre bras secondaires (19, 20) associés respectivement aux quatre bras principaux et articulés sur le corps (15),
— quatre patins de mesure (16, 17) reliés aux extrémités des bras principaux et des bras secondaires respectifs selon une configuration en parallélogramme, les patins restant ainsi parallèles à l'axe de la sonde,
— des moyens de rappel pour appliquer les patins (16, 17) contre la paroi du forage, caractérisé par le fait que la cartouche (13) et la sonde sont (12) reliés par une articulation (14) autorisant un écart angulaire (E) entre l'axe de la sonde (12) et celui de la cartouche (13), et la dimension (L) des patins (16, 17) parallèle à l'axe de la sonde (12) est au plus sensiblement égale au double de la dimension transversale (D) de la sonde (12).

9. Dispositif selon la revendication 8, caractérisé par le fait que ladite dimension des patins est sensiblement égale à 1,5 D.

10. Dispositif selon l'une des revendications 8 et 9, caractérisé par le fait que la sonde comprend des moyens (20) pour produire des signaux indicatifs de l'inclinaison de son axe par rapport à la verticale et des signaux indicatifs de l'orientation dudit axe par rapport à un azimuth de référence.

11. Dispositif selon l'une quelconque des revendications 8 à 10, caractérisé par le fait que lesdits moyens de rappel pour appliquer les patins contre la paroi du forage comprennent :

— des premiers moyens (29) pour appliquer auxdits patins une première force de rappel sensiblement constante quel que soit l'écartement des bras par rapport à la sonde ; et

— des seconds moyens (100, 101) pour appliquer auxdits patins une seconde force de rappel réglable et indépendante de ladite première force.

12. Dispositif pour appliquer, d'une manière réglable, les patins (16, 17) de mesure d'une sonde de diagraphie (12) contre les parois d'un forage, lesdits patins (16, 17) étant disposés à l'extrémité de bras (18 à 21) articulés sur le corps (15) de sonde (12), caractérisé par le fait qu'il comprend :

— des premiers moyens (29) pour appliquer auxdits patins (16, 17) une première force de rappel sensiblement constante quel que soit l'écartement des bras (18 à 21) par rapport à la sonde (12) ; et

— des seconds moyens (100, 101) pour appliquer auxdits patins (16, 17) une seconde force de rappel réglable et indépendante de ladite première force.

13. Dispositif selon la revendication 12, caractérisé par le fait que les premiers moyens comprennent des ressorts à lames agissant directement et individuellement sur chacun des patins, et les seconds moyens comprennent des ressorts montés dans la sonde, qui agissent sur des patins par l'intermédiaire de bras.

14. Dispositif selon la revendication 13, caractérisé par le fait que les ressorts montés dans la sonde agissent sur une paire de patins opposés par l'intermédiaire des bras principaux associés.

15. Dispositif selon l'une quelconque des revendications 13 à 14, caractérisé par le fait que les seconds moyens comprennent des moyens hydrauliques (108, 96) pour régler la seconde force de rappel en comprimant plus ou moins les ressorts (100, 101) montés dans la sonde.

**Claims**

1. Method for logging in a section of a deviated borehole, comprising the following operations :

— lowering into the borehole down to a given depth, by means of a cable (11), an apparatus comprising an elongated measurement sonde (12) and an elongated cartridge (13) connecting the sonde to the cable, the sonde being equipped with four pads (16, 17) carrying measurement means and distributed regularly around it, the pads being placed at the ends of respective arms (18, 19, 20, 21) hinged on the sonde,

— applying resiliently the pads against the borehole wall while keeping them parallel to the axis of the sonde, the latter being centered in relation to the borehole at the height of the pads ; characterized by

— moving the pads (16, 17) along the borehole by pulling on the cable (11) while allowing an angular offset (E) between the axis of the cartridge (13) and that of the sonde (12), whereby the cartridge (13) can rest on the borehole wall, the dimension (L) of the pads parallel to this axis being at most substantially equal to twice the transverse dimension (D) of the sonde (12).

2. Method according to claim 1, characterized in that during said movement, signals are produced which are indicative of the inclinaison of the sonde axis in relation to the vertical and its orientation in relation to a reference azimuth.

3. Method according to either of claims 1 or 2, characterized in that the resilient force applying the pads against the borehole wall is adjustable during their movement.

4. Method according to claim 3, characterized in that said resilient force results from the addition of a first force which is substantially constant whatever the position of the pads and a second adjustable force.

5. Method for applying, in an adjustable fashion, the measuring pads (16, 17) of a logging sonde (12) against the walls of a borehole, said pads (16, 17) being placed on the end of hinged arms (18-20), characterized by the following operations :

— applying to said pads (16, 17) a first resilient force substantially constant whatever the extension of the arms (18-20) in relation to the axis of the sonde (12) ; and

— applying to said pads (16, 17) a second resilient force adjustable and independent from said first force.

6. Method according to claim 5, characterized in that the substantially constant force is individually and directly applied to each of the pads and the adjustable force is common to all the pads and applied to them by means of the arms.

7. Method according to either of claims 5 or 6, characterized in that a signal indicative of the adjustable force is produced.

8. Logging apparatus for investigating the formations traversed by a section of a deviated borehole comprising :

— an elongated electronic cartridge (13) arranged to be connected to a cable (11),

— an elongated measuring sonde (12) connected to the cartridge and comprising :

— a body member (15),

— four main arms (18, 20) articulated on the body member and distributed regularly around said body member, the opposite arms being forced to remain symmetrical in relation to the axis of the sonde (12),

— four secondary arms (19, 20) respectively associated with the four main arms and hinged on the body member (15),

— four measuring pads (16, 17) connected to the ends of the respective main arms and secondary arms in a parallelogram configuration, the pads thus remaining parallel to the axis of the sonde,

— resilient means for applying said pads (16, 17) against the borehole wall, characterized in that the cartridge (13) and the sonde (12) are connected by means of a joint (14) allowing an angular offset (E) between the axis of the sonde (12) and that of the cartridge (13), and that the dimension (L) of the pads parallel to the axis of the sonde (12) is at most substantially equal to twice the transverse dimensions (D) of the sonde (12).

9. Apparatus according to claim 8, characterized in that said dimension of the pads is substantially equal to 1.5 D.

10. Apparatus according to either of claims 8 or 9, characterized in that the sonde comprises means (20) for producing signals indicative of the inclination of its axis with respect to the vertical and signals indicative of the orientation of said axis with respect to a reference azimuth.

11. Apparatus according to either of claims 8 to 10, characterized in that said resilient means for applying the pads against the borehole wall comprise :

— first means (29) for applying to said pads a first resilient force substantially constant whatever the extension of the arms in relation to the sonde ; and

— second means (100, 101) for applying to said pads a second resilient force adjustable and independent from said first force.

12. Apparatus for applying, in an adjustable fashion, the measuring pads (16, 17) of a logging sonde (12) against the walls of a borehole, said pads (16, 17) being placed on the end of arms (18-21) hinged on the body (15) of the sonde (12), characterized in that it comprises :

— first means (29) for applying to said pads (16, 17) a first resilient force substantially constant whatever the extension of the arms (18-21) in relation to the sonde (12) ; and

— second means (100, 101) for applying to said pads (16, 17) a second resilient force adjustable and independent from said first force.

13. Apparatus according to claim 12, characterized in that the first means comprise leaf springs acting directly and individually on each of the pads, and second means comprise springs mounted in the sonde, which act on the pads through the arms.

14. Apparatus according to claim 13, characterized in that the springs mounted in the sonde act on a pair of opposed pads by means of the associated main arms.

15. Apparatus according to either of claims 13 and 14, characterized in that said second means comprise hydraulic means (108, 96) for adjusting the second resilient means by means of compressing more or less the springs (100, 101) mounted in the sonde.

**Patentansprüche**

1. Verfahren zum Durchführen einer Diagraphie in einem geneigten Bohrlochabschnitt, umfassend die folgenden Arbeitsgänge :

Ablassen einer Vorrichtung, umfassend eine langgestreckte Meßsonde (12) und eine langgestreckte Kartusche (13) mittels eines Kabels (11) in das Bohrloch bis zu einer gegebenen Tiefe, wobei die Kartusche die Sonde mit dem Kabel verbindet, wobei die Sonde mit vier Schuhen (16, 17) ausgerüstet ist, die Meßmittel tragen und gleichförmig um sie verteilt sind, wobei die Schuhe an den Enden von zugeordneten Armen (18, 19, 20, 21) plaziert sind, die an die Sonde angelenkt sind ;

elastisches Andrücken der Schuhe gegen die Bohrlochwandung, wobei sie parallel zur Sondenachse gehalten werden, die ihrerseits in Höhe der Schuhe bezüglich des Bohrlochs zentriert ist, gekennzeichnet durch

Verlagern der Schuhe (16, 17) längs des Bohrlochs durch Zug an dem Kabel (11) unter Zulassung einer Winkelversetzung (E) zwischen der Achse der Kartusche (13) und derjenigen der Sonde (12), wodurch die Kartusche (13) auf der Bohrlochwandung ruhen kann, wobei die Abmessung (L) der Schuhe (16, 17) parallel zu dieser Achse höchstens im wesentlichen gleich dem Doppelten der Querabmessung (D) der Sonde (12) ist.

2. Verfahren nach Anspruch 1, dadurch gekennzeichnet, daß man während der genannten Verlagerung Signale erzeugt, die indikativ sind für die Inklination der Achse der Sonde relativ zur Vertikalen und ihrer Orientierung bezüglich eines Bezugsazimuths.

3. Verfahren nach einem der Ansprüche 1 und 2, dadurch gekennzeichnet, daß die Vorspannkraft, welche die Schuhe gegen die Bohrlochwandung anlegt, während ihrer Verlagerung einstellbar ist.

4. Verfahren nach Anspruch 3, dadurch gekennzeichnet, daß die genannte Vorspannkraft aus der Addition einer ersten unabhängig von der Position der Schuhe im wesentlichen konstanten Kraft und einer zweiten einstellbaren Kraft resultiert.

5. Verfahren zum einstellbaren Anpressen der Meßschuhe (16, 17) einer Diagraphiesonde (12) gegen die Wandungen eines Bohrlochs, wobei die Schuhe (16, 17) an den Enden von Gelenkarmen (18 bis 20) angeordnet sind, gekennzeichnet durch die Arbeitsgänge :

Einwirkenlassen auf die Schuhe (16, 17) einer ersten unabhängig von der Aufspreizung der Arme (18 bis 20) relativ zur Achse der Sonde (12) im wesentlichen konstanten Vorspannkraft ;

Einwirkenlassen auf die Schuhe (16, 17) einer zweiten einstellbaren und von der ersten unabhängigen Vorspannkraft.

6. Verfahren nach Anspruch 5, dadurch gekennzeichnet, daß die im wesentlichen konstante Kraft individuell und direkt auf jeden der Schuhe zur Einwirkung gebracht wird, und die einstellbare Kraft allen Schuhen gemeinsam ist, und auf sie über die Arme zur Einwirkung gebracht wird.

7. Verfahren nach einem der Ansprüche 5 und 6, dadurch gekennzeichnet, daß man ein Signal erzeugt, das indikativ ist für die einstellbare Kraft.

8. Diagraphievorrichtung für die Untersuchung von Formationen, die von einem Abschnitt eines geneigten Bohrlochs durchtäuft sind, umfassend :

eine langgestreckte Elektronikkartusche (13), die mit einem Kabel (11) verbindbar ist ;

eine langgestreckte Meßsonde (12), die mit der Kartusche verbunden ist und umfaßt :

einen Körper (15),

vier Hauptarme (18, 20), die an den Körper angelenkt sind und gleichförmig um diesen Körper verteilt angeordnet sind, wobei die einander gegenüberliegenden Arme derart befestigt sind, daß sie symmetrisch bezüglich der Achse der Sonde (12) bleiben,

vier Sekundärarme (19, 20), die den vier Hauptarmen jeweils zugeordnet sind und an den Körper (15) angelenkt sind,

vier Meßschuhe (16, 17), die mit den Enden der Hauptarme und Sekundärarme jeweils verbunden sind, gemäß einer Parallelogrammkonfiguration, wobei die Schuhe demgemäß parallel zur Sondenachse bleiben.

Vorspannmittel zum Anlegen der Schuhe (16, 17) an die Bohrlochwandung, dadurch gekennzeichnet, daß die Kartusche 13 und die Sonde (12) durch ein Gelenk (14) verbunden sind, das einen Winkelersatz (E) zwischen der Achse der Sonde (12) und derjenigen der Kartusche (13) zuläßt und daß die Abmessung (L) der Schuhe (16, 17) parallel zur Achse der Sonde (12) höchstens im wesentlichen gleich dem Doppelten der Querabmessung (D) der Sonde (12) ist.

9. Vorrichtung nach Anspruch 8, dadurch gekennzeichnet, daß die genannte Abmessung der Schuhe im wesentlichen gleich 1,5 D ist.

10. Vorrichtung nach Anspruch 8 und 9, dadurch gekennzeichnet, daß die Sonde Mittel (20) umfaßt zum Erzeugen von Signalen, die indikativ sind für die Inklination ihrer Achse relativ zur Vertikalen, sowie Signale, die indikativ sind für Orientierung der genannten Achse relativ zu einem Bezugsazimuth.

11. Vorrichtung nach einem der Ansprüche 8 bis 10, dadurch gekennzeichnet, daß die genannten Vorspannmittel zum Anlegen der Schuhe an die Bohrlochwandung umfassen :

erste Mittel (29) zum Einwirkenlassen auf die Schuhe einer ersten Vorspannkraft, die unabhängig von der Abspreizung der Arme bezüglich der Sonde im wesentlichen konstant ist und

zweite Mittel (100, 101) zum Einwirkenlassen auf die Schuhe einer zweiten einstellbaren und von der genannten ersten Kraft unabhängigen Kraft.

12. Vorrichtung zum einstellbaren Andrücken der Meßschuhe (16, 17) einer Diagraphiesonde (12) an die Wandungen eines Bohrlochs, wobei die Schuhe (16, 17) an den Enden von Armen (18 bis 21) angeordnet sind, die an den Körper (15) der Sonde (12) angelenkt sind, dadurch gekennzeichnet, daß sie umfaßt :

erste Mittel (29) zum Einwirkenlassen auf die Schuhe (16, 17) einer ersten unabhängig von der Abspreizung der Arme (18 bis 21) von der Sonde (12) im wesentlichen konstanten ersten Vorspannkraft ;

zweite Mittel (100, 101) zum Einwirkenlassen auf die Schuhe (16, 17) einer zweiten einstellbaren und von der ersten Kraft unabhängigen Vorspannkraft.

13. Vorrichtung nach Anspruch 12, dadurch gekennzeichnet, daß die ersten Mittel Lamellenfedern umfassen, die direkt und individuell auf jeden der Schuhe einwirken und daß die zweiten Mittel in der Sonde montierte Federn umfassen, die auf die Schuhe über die Arme einwirken.

14. Vorrichtung nach Anspruch 13, dadurch gekennzeichnet, daß die in der Sonde montierten Federn auf ein Paar voneinander gegenüberliegenden Schuhen über zugeordnete Hauptarme einwirken.

15. Vorrichtung nach einem der Ansprüche 13 bis 14, dadurch gekennzeichnet, daß die zweiten Mittel hydraulische Mittel (108, 96) umfassen zum Regulieren der zweiten Vorspannkraft unter mehr oder weniger starker Kompression der in der Sonde montierten Federn (100, 101).

**FIG.1**

**FIG.2**

**FIG.3**

FIG.4

0 074 317

3

**FIG. 5**

0 074 317

FIG.6

**FIG.7**

0 074 317

FIG.8

FIG.9